# EUROPEAN PATENT APPLICATION

(11) **EP 4 378 579 A1**
(43) Date of publication of application: **05.06.2024**
(21) Application number: 22211100.7
(22) Date of filing: 02.12.2022
(51) Int. Cl.: B01J 23/75, B01J 23/84, B01J 33/00, B01J 37/08, B01J 37/18, C10G 2/00, B01J 23/889

(54) **FISCHER-TROPSCH CATALYST PASSIVATION AND ACTIVATION**

(71) Applicant: BP P.L.C., London SW1Y 4PD (GB)
(72) Inventor: The designation of the inventor has not yet been filed
(74) Representative: Hamer, Christopher K.

(57) **Abstract**

The present disclosure relates generally to compositions and processes for producing Fischer-Tropsch catalysts. In particular, the application concerns a process for preparing a catalyst material for use in a Fischer-Tropsch synthesis reactor, comprising providing a first catalyst material comprising cobalt disposed on a support; contacting the first catalyst material with a first reducing agent at a first temperature and a first pressure to form a reduced catalyst material; then contacting the reduced catalyst material with carbon monoxide, thereby forming a passivated catalyst material comprising cobalt carbide.

## Description

### BACKGROUND OF THE DISCLOSURE

### Field

The present disclosure relates to compositions and processes for passivating Fischer-Tropsch catalysts, and subsequent activation and uses of such catalysts in the synthesis of oxygenated and non-oxygenated hydrocarbons.

### Technical Background

The conversion of synthesis gas into hydrocarbons by the Fischer-Tropsch process has been known for many years. The growing importance of alternative energy sources has resulted in renewed interest in the Fischer-Tropsch (FT) process as it allows a direct and environmentally acceptable route to high-quality fuels and feedstock chemicals.

FT processes are known for producing linear hydrocarbons for use in fuels, as well as oxygenates which serve as valuable feedstock chemicals. The hydrocarbon fuel deriving from FT processes is better able to meet increasingly stringent environmental regulations compared to conventional refinery-produced fuels, as FT-derived fuels typically have lower contents of sulfur, nitrogen, and aromatic compounds which contribute to the emission of potent pollutants such as SO₂, NOₓ, and particulates. Alcohols derived from FT processes often have a higher-octane rating than hydrocarbons and thus burn more completely, thereby reducing the environmental impact of such a fuel. Alcohols and other oxygenates obtained may also be used as reagents in other processes, such as in the synthesis of lubricants.

A variety of transition metals have been identified to be catalytically active in the conversion of synthesis gas into hydrocarbons and oxygenated derivatives thereof. In particular, cobalt, nickel, ruthenium and iron have been studied, often in combination with a support material, of which the most common are alumina, silica and carbon.

In the typical preparation of supported cobalt-containing FT synthesis catalysts, a solid support material is contacted with a solution of a soluble cobalt compound, such as cobalt nitrate. The impregnated support is subsequently calcined and/or oxidized to form a cobalt oxide, typically one or more of CoO, Co₂O₃, or Co₃O₄. However, such oxides typically have poor FT catalytic activity and must be reduced to form the preferred catalytically active species of cobalt metal. During calcination, cobalt oxides crystallites form on the support material. The properties of these crystallites, being precursors to the active catalyst, are known to have an effect on both the activity and selectivity of the final FT catalyst.

However, the reduced catalyst form of FT catalyst (e.g., cobalt metal), is prone to re-oxidation upon exposure to the atmosphere. Further, the reduction conditions necessary to transform the oxide to the active metal catalyst are typically more severe than typical FT process conditions, and current industry trends favor smaller, decentralized FT reactors placed in close proximity to syngas feedstocks. As such, the catalyst is often produced in a large scale in a specialized reactor and then transported to the FT reactor. During this storage and transport, the catalyst, especially if already reduced, must be carefully handled to reduce incidental exposure to oxygen that would decrease catalyst activity, yield, and/or lifetime.

A common solution is to encase the reduced catalyst in wax, forming a physical barrier to oxygen entry. The waxed-encased catalyst is then loaded in the reactor and the wax melted away. However, any remaining wax residues can carbonize during subsequent, high-temperature treatment, leading to undesirable deposits that are detrimental to catalyst function. A second solution is to incompletely reduce the catalyst material to preserve an oxide layer on the catalyst surface. Once installed in the reactor, this oxide layer can be reduced. However, this approach suffers from the fact that, if hydrogen is used as reducing agent, water is produced a byproduct which may be detrimental to the reactor and catalyst. Further, as mentioned above, the oxide reductions conditions are typically more severe than FT process conditions, requiring temperatures of at least 300 °C, at least 400 °C, or even at least 500 °C. Such high temperatures require reactors to be constructed with higher grades of steel than otherwise necessary, which renders some reactors unfit for this usage and increases the costs of the reactors designed to accommodate severe reduction protocols.

Accordingly, there exists a need to develop new methods of producing passivated catalyst materials that allow for the facile generation and handling of reduced catalyst materials.

### SUMMARY

The inventors have found a process to generate a highly active catalyst composition for use in FT synthesis. The process, and compositions derived thereof, allow for the creation of catalyst materials that resist environmental oxidation, but may be reduced to the active form under mild conditions with advantageously inert byproducts. Notably, this approach allows the ex-situ preparation of passivated catalysts that may be subsequently stored, transported, and introduced into a Fischer-Tropsch reactor. As the activation conditions are mild, the Fischer-Tropsch reactor does not need to be able to reach abnormally high pressures and temperatures, lowering equipment costs at the point of use.

Thus, in one aspect, the present disclosure provides a process for preparing a catalyst material for use in a Fischer-Tropsch synthesis, the process comprising:
providing a first catalyst material comprising cobalt (e.g., in the form of oxide) disposed on a support;
contacting the first catalyst material with a first reducing agent at a first temperature and a first pressure to form a reduced catalyst material; then
contacting the reduced catalyst material with carbon monoxide, thereby forming a passivated catalyst material comprising cobalt carbide.

In another aspect, the present disclosure provides a passivated catalyst material for the Fischer-Tropsch synthesis of a hydrocarbon composition from a gaseous feed comprising carbon monoxide and hydrogen, the passivated catalyst material comprising cobalt disposed on a support, at least 5 wt% (e.g., at least 25%, at least 50%, or even at least 75%) of the cobalt of the passivated catalyst material is in the form of cobalt carbide.

In another aspect, the present disclosure provides a passivated catalyst material prepared by a process as otherwise described herein.

In another aspect, the present disclosure provides a process for converting a mixture of hydrogen and carbon monoxide to a hydrocarbon composition comprising one or more optionally oxygenated hydrocarbons, the process comprising:
providing a reactor zone having a passivated catalyst material as otherwise described herein disposed therein;
contacting the passivated catalyst material with a second reducing agent at a second temperature and a second pressure to form an activated catalyst material, wherein the activated catalyst material comprises less metal carbide than the passivated catalyst material.

In certain embodiments as otherwise described herein, an activated catalyst material as otherwise described herein comprises hcp cobalt metal in a ratio of at least 50:50 to fcc cobalt metal as measured by x-ray diffraction. In certain desirable embodiments as otherwise described herein, the hcp metal is present in a ratio of at least 75:25 (e.g., at least 80:20 or at least 85:15) to fcc cobalt metal as measured by x-ray diffraction.

In certain embodiments, a process as otherwise described herein further comprises contacting the activated catalyst material in the reaction zone with a gaseous mixture comprising carbon monoxide and hydrogen, to form the hydrocarbon composition.

In another aspect, the present disclosure provides a process for preparing a catalyst material for use in a Fischer-Tropsch synthesis, comprising:
providing a first catalyst material comprising cobalt oxide disposed on a support;
contacting the first catalyst material with a first reducing agent at a first temperature and a first pressure to form a reduced catalyst material, wherein the first catalyst material comprises cobalt metal;
contacting the reduced catalyst material with carbon monoxide, thereby forming a passivated catalyst material comprising cobalt carbide; and
contacting the passivated catalyst material with a second reducing agent at a second temperature and a second pressure to form an activated catalyst material, wherein the activated catalyst material comprises less metal carbide than the passivated catalyst material, .
wherein an hcp proportion in a ratio of hcp cobalt metal to fcc cobalt metal of the activated catalyst material is at least 10 points greater than an hcp proportion of a ratio of hcp cobalt metal to fcc cobalt metal of the reduced catalyst material.
In certain such embodiments, the reduced catalyst material comprises hcp cobalt metal and fcc cobalt metal in a ratio in the range of 25:75 and 75:25; and the activated catalyst material comprises hcp cobalt metal in a ratio of at least 75:25 to fcc cobalt metal.

Other aspects of the disclosure will be apparent to those skilled in the art in view of the description that follows.

### BRIEF DESCRIPTION OF THE DRAWINGS

Fig. 1 is a graph of the relative proportions of certain cobalt species during treatment according to an example embodiment.
Fig. 2 is a representative x-ray diffractogram displaying various species present according to an example embodiment.
Fig. 3 is a graph of relative proportions of certain cobalt species during treatment according to an example embodiment.
Fig. 4 is a graph of the formation of cobalt metal and cobalt carbide when subjected to various gases according to an example embodiment.
Fig. 5 is a graph of the relative carbide concentration under various conditions over time according to an example embodiment.
Fig. 6 provides data for an example Fischer-Tropsch synthesis.

### DETAILED DESCRIPTION

The present disclosure is concerned with processes to prepare catalyst materials for use in Fischer-Tropsch synthesis processes, and the catalyst materials themselves and methods for using them.

The present inventors have found that treatment of the reduced catalyst material with carbon monoxide can form metal carbides, such as cobalt carbides, that result in a passivated catalyst material. Advantageously, this transformation results in a catalyst passivated material that resists atmospheric oxidation, or other degradation, during storage or transport, as metal carbides cannot be further oxidized by molecular oxygen or other common oxidizing agents. Further, metal carbides are known for their exceptional hardness, resulting in a more mechanically robust passivated catalyst material, better able to withstand mechanical stresses during transportation between sites and handling, e.g., during loading into a reactor. Moreover, the inventors have found that a cobalt carbide-containing passivated catalyst material can be easily converted to an activated catalyst material at relatively mild conditions, yielding methane as the chief byproduct. This production of methane is superior to conventional activation processes, for instance reduction from an oxide using hydrogen, which result in undesirable byproducts such as water. Under these conditions, water can be a potent oxidant, inhibit reduction, promote cobalt sintering and be detrimental to the catalyst and reactor functioning. And, as the conditions for activation according to the present disclosure are mild, high pressure hydrogen equipment may not be necessary for the activation, simplifying plant capital requirements. In fact, in many cases, the carbided material can be converted to activated catalyst under the Fischer-Tropsch reaction conditions themselves.

Such an approach allows physical separation of catalyst preparation and Fischer-Tropsch synthesis, with stable passivated catalyst being made at a first location and transported, in some cases over many miles, to a Fischer-Tropsch reactor in which the catalyst is depassivated by activation under relatively mild conditions, then used in a Fischer-Tropsch synthesis. This is especially advantageous, as reactor requirements for the two processes are generally rather different. Further, this approach allows the use of decentralized Fischer-Tropsch reactors that do not need to be capable of conventional, high-temperature, high-pressure catalyst activation. Accordingly, far fewer high-temperature, high-pressure reactors can be used to activate catalyst for many Fischer-Tropsch reactors, which can have lower-temperature and/or lower-pressure capabilities.

Cobalt metal as commonly formed in an activated form of a Fischer-Tropsch catalyst material (e.g., from reduction from cobalt oxide) is typically made up of a mixture of two metallic phases: hexagonal close-packed (hcp) cobalt and face-centered cubic (fcc) cobalt. As the energy difference between these two phases is small, both phases are typically present in substantial amounts. The present inventors have noted that hcp cobalt is more active for FT processes than the typical mixed-phase cobalt. See, e.g., Journal of Catalysis 277, 14-26 (2011). Advantageously, while reduction of cobalt oxide provides a mixture of hcp cobalt and fcc cobalt, reduction of the cobalt carbide-based passivated catalyst surprisingly generates a catalyst that includes cobalt metal almost exclusively in the hcp phase. Accordingly, the present methods can be utilized to not only generate a superior passivated catalyst material for transport and handling, but, upon activation, forms a catalyst composition superior to the reduced catalyst material prior to passivation, and to a reduced catalyst material that would be made by conventional direct reduction of cobalt oxide.

Accordingly, one aspect of the disclosure provides a process for preparing a catalyst material for use in a Fischer-Tropsch synthesis, the process comprising:
providing a first catalyst material comprising cobalt disposed on a support;
contacting the first catalyst material with a first reducing agent at a first temperature and a first pressure to form a reduced catalyst material; then
contacting the reduced catalyst material with carbon monoxide, thereby forming a passivated catalyst material comprising cobalt carbide.

The catalyst materials described herein include cobalt, in various forms, a support, and optionally other metals or reaction modifiers. Supported cobalt-based materials are well-known in the art, and can generally be adapted for use in the processes and materials described herein.

In certain embodiments as otherwise described herein, the catalyst materials as described herein include cobalt in the range of 5 wt% to 35 wt%, on an elemental basis. For example, in certain embodiments as otherwise described herein, cobalt may be present in the range of 7-35 wt%, or 10-35 wt%, or 5-25 wt%, or 7-25 wt%, or 10-25 wt%, or 5-20 wt%, or 7-20 wt%, or 10-20 wt%.

The catalyst materials as described herein can include other metal species, e.g., as promoters. For example, in certain embodiments as otherwise described herein, a catalyst material includes manganese, for example, in an amount in a range of up to 15 wt%, e.g., up to 12 wt%, or up to 10 wt%, or up to 7 wt%, on an elemental basis. In certain such embodiments, a catalyst material includes manganese in an amount in the range of 2-15 wt%, e.g., 3-15 wt%, or 4-15 wt%, or 2-12 wt%, or 3-12 wt%, or 4-12 wt%, or 2-10 wt%, or 3-10 wt%, or 4-10 wt%, or 2-7 wt%, or 3-7 wt%, or 4-7 wt%. Of course, in other embodiments substantially no manganese is present (e.g., less than 0.1 wt% or less than 0.5 wt%) manganese is present. Other metals can be present, e.g., as promoters.

Various support materials are known in the art and may be selected based on the precise requirements of the FT reactor or other chemical, mechanical or economic requirements. In certain embodiments as otherwise described herein, the support comprises at least one of titanium oxide, zirconium oxide, cerium oxide, aluminum oxide, silicon oxide and zinc oxide. In particular embodiments, the support comprises exactly one of titanium oxide, zirconium oxide, cerium oxide, aluminum oxide, silicon oxide and zinc oxide.

The first catalyst material can be prepared using methods conventional in the art. In certain embodiments, the cobalt is introduced onto the support through the introduction of a solution containing a soluble cobalt salt (e.g., cobalt nitrate) to the support and the combination calcined and/or oxidized, rendering insoluble cobalt particles (e.g., as cobalt oxide) on the support. In certain embodiments, the first catalyst material comprises the combination of the calcined metal (e.g., including calcined cobalt) adhered to the support. In particular embodiments, cobalt of the first catalyst material (i.e., as least a portion of the cobalt, up to the entirety of the cobalt, for example, at least 50%, at least 75%, or at least 90%) is in the form of at least one of cobalt oxide and cobalt hydroxide. For example, the cobalt may be cobalt oxide (e.g., CoO, Co₃O₄, or Co₂O₃, or a combination thereof) or cobalt hydroxide (e.g., Co(OH)₂ or Co(OH)₃ or a combination thereof), or a combination of cobalt oxide and cobalt hydroxide. In certain embodiments, the first catalyst material comprising cobalt oxide disposed on a support is at least partially oxidized, wherein at least 10% of the cobalt is in an oxidized form, e.g., at least 20% of cobalt is in an oxidized form, or at least 30% is in an oxidized form, or at least 50% is in an oxidized form; this could be in the form of fully oxidized cobalt or a passivated material with an oxide layer and metallic core.

Following provision of the first catalyst material, the cobalt species disposed thereon, e.g., in the form of cobalt oxide(s)/hydroxide(s) as described above, are substantially reduced to generate the reduced catalyst material. This process results in at least portion of the cobalt being transformed into cobalt metal. Desirably, the reduction results in at least 50 mol% of the cobalt of the reduced catalyst material being in the form of cobalt metal, e.g., at least 75 mol%, or at least 90 mol% of the cobalt being in the form of cobalt metal. For example, in particular embodiments, at least 95 mol% of the cobalt is in the form of cobalt metal). The person of ordinary skill in the art can use conventional methods to reduce cobalt catalyst materials (e.g., cobalt oxide- or cobalt hydroxide-based materials) to metallic form. In certain embodiments as otherwise described herein, the first reducing agent is hydrogen gas, H₂. The hydrogen gas may be mixed with other gases, such as an inert carrier gas. Examples of such inert carrier gasses include nitrogen, carbon dioxide, argon, or helium. The hydrogen gas may also be mixed with carbon monoxide, with or without one or more additional carrier gasses. In certain embodiments, the first reducing gas comprises carbon monoxide, wherein the carbon monoxide is present in an amount in the range of 0.1-10 vol%, e.g., 0.1-5 vol%, or 0.1-1 vol%. But in other embodiments, substantially no carbon monoxide is present (i.e., no more than 0.1 vol%). In certain embodiments, the reduction is effected by contacting the first catalyst material with a first reducing gas, wherein the first reducing gas comprises the first reducing agent, wherein the first reducing gas comprises at least 50 vol% H₂ (e.g., at least 60 vol%, or at least 70 vol%, or at least 80 vol%, or at least 90 vol%, or at least 95 vol%, or essentially 100 vol% H₂).

The reduction of the first catalyst material to provide the reduced catalyst material is performed at a first temperature. In certain embodiments as otherwise described herein, the first temperature is in the range of 200 °C to 500 °C. For example, in certain embodiments, the first temperature is in the range of 250 °C to 400 °C, or in the range of 260 °C to 350 °C, or in the range of 270 °C to 330 °C, or in the range of 280 °C to 320 °C, or in the range of 290 °C to 310 °C. In certain embodiments, the first temperature is approximately 300 °C. The reduction of the first catalyst material to the reduced catalyst material occurs at a first pressure. In certain embodiments as otherwise described herein, the first pressure is in the range of 0.5 bara to 5 bara, e.g., 0.7 bara to 3 bara. The reduction can be performed for a time (e.g., up to 48 hours, e.g., 2-48 hours or 8-30 hours) and under conditions sufficient to provide the desired degree of reduction as described above.

As described herein, the treatment of the first catalyst material with the first reducing agent produces a reduced catalyst material that includes cobalt as cobalt metal (for example, in an amount of at least 50 mol%, e.g., at least 75 mol%, or at least 90 mol%, or at least 95 mol% of the cobalt as described above). In certain embodiments as otherwise described herein, the cobalt metal of the reduced catalyst material comprises significant amounts of both fcc cobalt metal as well as hcp cobalt metal. In particular embodiments, the cobalt metal includes fcc cobalt metal and hcp cobalt metal present in a ratio in the range of 25:75 to 75:25.

In typical Fischer-Tropsch processes, this reduced catalyst material would be itself be suitable for use as a catalyst. The present inventors have determined, however, that conversion of this reduced catalyst material into carbide form can provide a passivated catalyst material that can be stable for transportation and handling over relatively long distances and times, and also be converted by later reduction to substantially hcp cobalt metal, which the inventors have noted is more active in Fischer-Tropsch processes than the fcc form.

The passivated catalyst material is formed by contacting the reduced catalyst material with carbon monoxide. Advantageously, the passivated catalyst material includes cobalt carbide). As described further in the Examples below, the relative proportions of metal species may be ascertained by fitting x-ray diffractograms. In certain embodiments as otherwise described herein, at least 25 mol%, or at least 50 mol% of the cobalt of the passivated catalyst material is in the form of cobalt carbide as measured by x-ray diffraction. For example, in some embodiments, at least 75 mol% or even at least 90 mol% of the cobalt of the passivated catalyst material is in the form of cobalt carbide. Of course, in other embodiments, passivation can be effective even at lower conversions to carbide, e.g., when surface carbide of a catalyst particle is sufficient to protect cobalt metal interior to the particle.

The reaction of the reduced catalyst material to the passivated catalyst material is performed at a passivation pressure and a passivation temperature. In certain embodiments as otherwise described herein, the passivation pressure is in the range of >0 bara to 30 bara, e.g., 0.2-30 bara, or 0.2-20 bara, or 0.2-10 bara, or 0.5-30 bara, or 0.5-21 bara, or 0.5-10 bara. In certain particular embodiments, the passivation pressure is less than 10 bara. The carbon monoxide can be provided at a variety of concentrations in a process gas, e.g., at least 25 vol%, at least 50 vol%, or at least 75 vol%; the process gas can further include, e.g., inert gases such as nitrogen. In certain embodiments, the passivation temperature is in the range of 25 °C to 250 °C, e.g., 50 °C to 225 °C. For example, in particular embodiments, the passivation temperature is in the range of 25 °C to 200 °C, or 75 °C to 200 °C, or 100 °C to 200 °C, or 125 °C to 200 °C. In particular embodiments, the passivation temperature is about 200 °C. In other embodiments, the passivation temperature is no more than 150 °C, or no more than 100 °C. For example, in certain embodiments, the passivation temperature is in the range of 25 °C to 150 °C, e.g., 50 °C to 125 °C, or 50 °C to 100 °C. The person of ordinary skill in the art will perform the passivation with carbon monoxide under conditions (e.g., temperature, pressure, time) that provides a desired degree of conversion to carbide.

One particular advantage of the processes according to the present disclosure is the formation of a passivated catalyst material that has improved resistance to atmospheric oxidation. This is affected by chemically protecting at least a portion of the cobalt metal as the carbide. As described elsewhere, the carbide can be then converted to the activated catalyst material. One benefit of this approach is that the passivated catalyst material may be formed in one reactor, which may be specially suited or optimized towards catalyst passivation, and then transported to another reactor for use in a FT process with a minimized risk of forming undesirable metal oxides. Given industry trends towards FT reactor decentralization, it is beneficial to be able to geographically separate catalyst production and catalyst use in FT processes.

Accordingly, in certain embodiments the process as otherwise described herein further comprises packaging the passivated catalyst material. The passivated catalyst material can be packaged in a closed container like a drum, a bag, a box, a canister, or a modular catalyst container. Likewise, in certain embodiments as otherwise described herein, the process further comprises transporting the passivated catalyst material to a location distant from the reactor in which it is passivated. In particular embodiments, the transportation is to a different reactor, or to a different building, a different site, a different facility, or a different plant. In certain such embodiments, the location distant the reactor in which the passivated catalyst material is passivated is at least one mile therefrom, e.g., at least ten miles therefrom, at least twenty miles therefrom, at least fifty miles therefrom, or at least one hundred miles therefrom.

For example, the passivated catalyst material may be produced at a first reactor, optionally packaged, and then transported to a second reactor. In particular embodiments, the first and second reactors are not equivalent (e.g., the first reactor may be optimized for production of the passivated catalyst material, and the second reactor may be optimized for a FT process). Notably, the second reactor need not be built to the same specifications as the first reactor; as FT processes are typically performed under conditions less stringent than those for the initial reduction, lower grades of materials can be used in the FT reactors in which the passivated catalysts are activated and used than those in which the initial reduction is performed.

Advantageously, the passivation techniques and passivated catalysts described herein can allow for reactor specialization, in which a first reactor can be efficiently constructed, scaled and operated to produce the passivated catalyst material, while a second reactor can be efficiently constructed, scaled and operated for the relatively mild activation of the passivated material and subsequent Fischer-Tropsch synthesis. For instance, the emerging field of biomass conversion suitably uses relatively smaller Fischer-Tropsch reactors that can be placed close to the site of biomass generation, such as municipal waste or agricultural products or agricultural waste.

The packaging and transport of the passivated catalyst also allows for lower risk in the catalyst production process as a standardized passivated catalyst can be produced and quality-checked before shipment to the Fischer-Tropsch reactor site. This can allow optimization and standardization of the passivation protocol in ways that may be unavailable to the Fischer-Tropsch reactor. Further, offsite catalyst production allows identification of catalyst batches that do not meet certain specifications and removes reliance on the Fischer-Tropsch reactor and operators thereof to consistently produce highly-active catalyst material. As synthesis reactor downtime can be costly, any process steps that reduce risk of reactor shutdown (e.g., due to an improperly prepared catalyst), or speed catalyst preparation, such as those of the present disclosure, are very valuable.

Accordingly, another aspect of the disclosure is a passivated catalyst material for the Fischer-Tropsch synthesis of a hydrocarbon composition from a gaseous feed comprising carbon monoxide and hydrogen, the passivated catalyst material comprising cobalt disposed on a support, wherein at least 25 mol% (e.g., at least 50 mol%) of the cobalt of the passivated catalyst material is in the form of cobalt carbide as measured by x-ray diffraction. In certain desirable embodiments, at least 75 mol% (e.g., at least 90 mol%) of the cobalt of the passivated catalyst material is in the form of cobalt carbide as measured by x-ray diffraction The amount of cobalt and the amount and identities of any other metals, the support, and other particular characteristics of the passivated catalyst material can be as described above. The passivated catalyst materials can be made as described herein, and can be packaged as described above.

As described above, the passivated catalyst material can be treated to convert at least a portion of the cobalt carbide to cobalt metal, making it suitable for use in a FT process. Accordingly, an additional aspect of the present disclosure provides a process for preparing an activated catalyst material suitable for use in a Fischer-Tropsch synthesis, that includes contacting a passivated catalyst material as described herein with a second reducing agent at a second temperature and a second pressure to form an activated catalyst material, such that the activated catalyst material comprises less cobalt carbide and more cobalt metal than the passivated catalyst material.

In cases when the passivated catalyst material is transported from elsewhere, the method can include unpackaging the passivated catalyst material (e.g., from the closed container, e.g., drum, bag, box, canister, or modular catalyst container in which it is packaged.

Notably, the second reducing agent may be selected to efficiently convert a desired portion, or the entirety, of the cobalt carbide to cobalt metal. In certain embodiments, the amount of cobalt carbide in the activated catalyst material (i.e., as a fraction of total cobalt) is no more than 50 mol% of the amount of cobalt carbide in the passivated catalyst material (i.e., as a fraction of total cobalt). For example, in certain embodiments as otherwise described herein, the amount of cobalt carbide in the activated catalyst material (i.e., as a fraction of total cobalt) is no more than 25 mol%, e.g., no more than 10 mol%, or no more than 5 mol%, or no more than 1 mol% of the amount of cobalt carbide in the passivated catalyst material (i.e., as a fraction of total cobalt). Additionally, it is possible that some cobalt metal remains from the formation of the reduced catalyst material which was not transformed into a carbide, and was further not oxidized during handling of the passivated catalyst material. In certain embodiments as otherwise described herein, in the activated catalyst material at least 50 mol% of the cobalt is in the form of cobalt metal, e.g., at least 75 mol% or at least 90 mol%, or at least 95 mol%, or at least 99 mol% of the cobalt is in the form of cobalt metal. The proportion of cobalt species is determined by x-ray diffraction methods well known in the art (see Examples).

A surprising effect of the processes and materials described herein is that the cobalt metal formed as part of the activated catalyst material has been unexpectedly found to have a larger proportion of hcp cobalt metal compared to the cobalt metal formed by the conventional reduction of metal oxides (e.g., formed during the production of the reduced catalyst material as otherwise described herein and in conventional reductions of cobalt oxide/hydroxide-based catalyst materials for use in FT processes), and concomitantly less of the other common cobalt metal phase, fcc cobalt metal. This is advantageous as hcp cobalt metal is found to exhibit a higher activity for FT processes compared to fcc cobalt metal. The higher activity of hcp cobalt metal means that less catalyst can be used to achieve the same throughput as conventional catalysts, and/or the reactor may be operated at lower temperatures. Both of these effects can result in significant cost savings. Accordingly, in certain embodiments as otherwise described herein, the activated catalyst material comprises cobalt metal, wherein the cobalt metal comprises hcp cobalt metal in a ratio of at least 50:50 (e.g., at least 60:40 or at least 70:30) to fcc cobalt metal, as measured by x-ray diffraction. For example, in certain embodiments as otherwise described herein, the cobalt metal comprises hcp cobalt metal in a ratio of at least 75:25 (e.g., at least 80:20, or at least 85:15) to fcc cobalt metal. This is contrasted with lower ratios (typically 50:50 or less) in conventional materials. Amounts of hcp and fcc cobalt can be determined using x-ray diffractometry as otherwise described in the Examples.

In certain embodiments, the second reducing agent is the same as the first reducing agent. In other embodiments, the second reducing agent is different from the first reducing agent. In particular embodiments, the second reducing agent is hydrogen gas, H₂. The hydrogen gas may be mixed with other gases, such as an inert carrier gas. Examples of such inert carrier gasses include nitrogen, carbon dioxide, argon, or helium. The hydrogen gas may also be mixed with carbon monoxide, with or without one or more additional carrier gasses. In certain embodiments, the reduction is effected by contacting the passivated catalyst material with a second reducing gas, wherein the second reducing gas comprises the second reducing agent, wherein the second reducing gas comprises at least 50 vol% H₂ (e.g., at least 60 vol%, or at least 70 vol%, or at least 80 vol%, or at least 90 vol%, or at least 95 vol%, or essentially 100 vol% H₂).

In certain embodiments, the reduction is effected by contacting the passivated catalyst material with a second reducing gas, wherein the second reducing gas comprises hydrogen and carbon monoxide. In certain embodiments, the second reducing gas is a mixture of hydrogen and carbon monoxide, i.e. synthesis gas. When the second reducing gas is synthesis gas, the volume ratio of hydrogen to carbon monoxide (H₂:CO) in the second reducing gas is typically at least 1 : 1, preferably at least 1.1 : 1, more preferably at least 1.2 : 1, more preferably at least 1.3 : 1, more preferably at least 1.4 : 1, more preferably at least 1.5 : 1, or even at least 1.6 : 1. When the second reducing gas is synthesis gas, the volume ratio of hydrogen to carbon monoxide (H₂:CO) in the second reducing gas is at most 10 : 1, preferably at most 5 : 1, most preferably at most 3 : 1. Examples of suitable volume ratios of hydrogen to carbon monoxide (H₂:CO) in the second reducing gas include the ranges: from 1 : 1 to 5 : 1; from 1.1 : 1 to 3 : 1 ; from 1.2 : 1 to 3 : 1; from 1.3 : 1 to 2.2 : 1 ; from 1.4 : 1 to 5 : 1 ; from 1.4 : 1 to 3 : 1 ; from 1.4 : 1 to 2.2 : 1 ; from 1.5 : 1 to 3 : 1 ; from 1.5 : 1 to 2.2 : 1 ; and, from 1.6:1 to 2.2:1.

The reduction of the passivated catalyst material to the activated catalyst material is performed at a second temperature and a second pressure. In certain embodiments as otherwise described herein, the second temperature is in the range of 120 °C to 250 °C. Notably, the reduction of carbide can be performed at lower temperatures than reductions of cobalt oxide/hydroxide-based materials, which are typically conducted in the range of 260 °C to 400 °C, or even up to 500 °C. For example, in certain embodiments, the second temperature is in the range of 135-250 °C, or 150-250 °C, or 120-235 °C, or 135-235 °C, or 150-235 °C or 120-220 °C, or 135-220 °C, or 150-220 °C. In certain embodiments, the second temperature is in the range of 120-195 °C, e.g., 135-195 °C, or 150-195 °C. In particular embodiments, the second temperature is approximately 175 °C. In certain embodiments as otherwise described herein, the second pressure is in the range of 0.5 bara to 5 bara. The reduction can be performed for a time and under conditions sufficient to provide the desired degree of reduction as described above. For example, the reduction of the passivated catalyst material to the activated catalyst material can be performed for a time in the range of 2 hours to 48 hours, or 2 hours to 36 hours, or 2 hours to 24 hours, or 2 hours to 12 hours, or 2 hours to 8 hours. For example, the reduction may be performed for a time in the range of 3 hours to 48 hours, or 4 hours to 48 hours, or 5 hours to 48 hours, or 5 hours to 36 hours, or 5 hours to 24 hours.

In certain embodiments, the reduction of the passivated catalyst material to the activated catalyst material is performed at a second temperature which is at least 180 °C, for example, the second temperature may be in the range of 200-250 °C, or 200-240 °C, or 200-235 °C, or 200-230 °C, or 200-220 °C. In certain embodiments, the second pressure is greater than 5 bara, such as greater than 10 bara; the second pressure may be in the range of 10-50 bara, or 10-40 bara, or 10-35 bara, or 15-50 bara, or 15-40 bara, or 15-30 bara, or 20-50 bara, or 20-40 bara, or 20-35 bara. The reduction can be performed for a time and under conditions sufficient to provide the desired degree of reduction as described above. For example, the reduction of the passivated catalyst material to the activated catalyst material can be performed for a time in the range of 2 hours to 48 hours, or 2 hours to 36 hours, or 2 hours to 24 hours, or 2 hours to 12 hours, or 2 hours to 8 hours. For example, the reduction may be performed for a time in the range of 3 hours to 48 hours, or 4 hours to 48 hours, or 5 hours to 48 hours, or 5 hours to 36 hours, or 5 hours to 24 hours.

In certain embodiments, the reduction of the passivated catalyst material to the activated catalyst material is performed using synthesis gas as the second reducing gas, at a second temperature of at least 180 °C and at a second pressure which is greater than 5 bara.

In certain embodiments, the conditions of a Fischer-Tropsch process are suitable for the activation of the passivated catalyst material, and so separate conditions are not required.

In certain embodiments, the gaseous feed comprising carbon monoxide and hydrogen which is used in the Fischer-Tropsch synthesis may be used as the second reducing gas, and the temperature and pressure used in the Fischer-Tropsch synthesis may be used as the second temperature and second pressure respectively.

Another aspect of the disclosure is an activated catalyst material for the Fischer-Tropsch synthesis of a hydrocarbon composition (optionally oxygenated) from a gaseous feed comprising carbon monoxide and hydrogen, the activated catalyst material comprising cobalt disposed on a support, wherein the cobalt metal comprises hcp cobalt metal in a ratio of at least 50:50 to fcc cobalt metal. For example, in certain embodiments, the hcp cobalt metal is present in a ratio of at least 75:25, e.g., at least 80:20, or at least 85:15. The activated catalyst material according to this aspect of the disclosure can be as described above with respect to the methods of reducing the carbide, above.

Another aspect of the disclosure is a process for preparing a catalyst material for use in a Fischer-Tropsch synthesis, comprising:
providing a first catalyst material comprising cobalt oxide disposed on a support;
contacting the first catalyst material with a first reducing agent at a first temperature and a first pressure to form a reduced catalyst material, wherein the first catalyst material comprises cobalt metal;
contacting the reduced catalyst material with carbon monoxide, thereby forming a passivated catalyst material comprising cobalt carbide; and
contacting the passivated catalyst material with a second reducing agent at a second temperature and a second pressure to form an activated catalyst material, wherein the activated catalyst material comprises less metal carbide than the passivated catalyst material, wherein the activated catalyst material comprises cobalt metal.
The method operations and various catalyst materials can be as otherwise described herein.

In certain desirable embodiments, the proportion of hcp metal is substantially higher in the activated catalyst material than it is in the reduced catalyst material. For example, in certain embodiments as otherwise described herein, an hcp proportion in a ratio of hcp cobalt metal to fcc cobalt metal of the activated catalyst material is at least 10 points greater than an hcp proportion of a ratio of hcp cobalt metal to fcc cobalt metal of the reduced catalyst material. As used herein, the difference between a 50:50 ratio and a 60:40 ratio is ten points. In certain such embodiments, an hcp proportion in a ratio of hcp cobalt metal to fcc cobalt metal of the activated catalyst material is at least 15 points, e.g., at least 20 points, or at least 25 points, greater than an hcp proportion of a ratio of hcp cobalt metal to fcc cobalt metal of the reduced catalyst material. For example, in certain embodiments the reduced catalyst material comprises hcp cobalt metal and fcc cobalt metal in a ratio in the range of 25:75 and 75:25; and the activated catalyst material comprises hcp cobalt metal in a ratio of at least 75:25 to fcc cobalt metal.

Once generated, the activated catalyst material is suitable for use in an FT process. Accordingly another aspect of the disclosure provides a process for converting a mixture of hydrogen and carbon monoxide to a hydrocarbon composition comprising one or more optionally oxygenated hydrocarbons, the process comprising:
providing an activated catalyst material according to any of claims 30-40 in a reactor zone (e.g., in a Fischer-Tropsch reactor); and
contacting the activated catalyst material in the reactor zone with a gaseous mixture comprising carbon monoxide and hydrogen, to form the hydrocarbon composition.

The person of ordinary skill in the art can adapt conventional FT processes for use of the catalyst materials described herein In certain embodiments of the Fischer-Tropsch processes of the disclosure, the volume ratio of hydrogen to carbon monoxide (H₂:CO) in the gaseous reactant mixture is typically at least 1 : 1, preferably at least 1.1 : 1, more preferably at least 1.2 : 1, more preferably at least 1.3 : 1, more preferably at least 1.4 : 1, more preferably at least 1.5 : 1, or even at least 1.6 : 1. In some or all embodiments of the present invention, the volume ratio of hydrogen to carbon monoxide (H₂:CO) in the gaseous reactant mixture is at most 5 : 1, preferably at most 3 : 1, most preferably at most 2.2 : 1. Examples of suitable volume ratios of hydrogen to carbon monoxide (H₂:CO) in the gaseous reactant mixture include the ranges: from 1 : 1 to 5 : 1; from 1.1 : 1 to 3 : 1 ; from 1.2 : 1 to 3 : 1; from 1.3 : 1 to 2.2 : 1 ; from 1.4 : 1 to 5 : 1 ; from 1.4 : 1 to 3 : 1 ; from 1.4 : 1 to 2.2 : 1 ; from 1.5 : 1 to 3 : 1 ; from 1.5 : 1 to 2.2 : 1 ; and, from 1.6:1 to 2.2:1. The gaseous reactant stream may also comprise other gaseous components, such as nitrogen, carbon dioxide, water, methane and other saturated and/or unsaturated light hydrocarbons, each preferably being present at a concentration of less than 30% by volume.

Conventional Fischer-Tropsch temperatures may be used in order to prepare optionally oxygenated hydrocarbons in accordance with the present disclosure. For example, the temperature of the reaction may suitably be in the range from 100 to 400 °C, such as from 150 to 350 °C, or from 150 to 250 °C. The pressure of the reaction may suitably be in the range from 10 to 100 bar (from 1 to 10 MPa), such as from 15 to 75 bar (from 1.5 to 7.5 MPa), or from 20 to 50 bar (from 2.0 to 5.0 MPa).

In preferred embodiments, the temperature of the Fischer-Tropsch reaction is in the range from 150 to 350 °C, more preferably from 180 to 300 °C, and most preferably from 200 to 260 °C. In preferred embodiments, the pressure of the Fischer-Tropsch reaction is in the range from 10 to 100 bar (from 1 to 10 MPa), more preferably from 10 to 60 bar (from 1 to 6 MPa) and most preferably from 20 to 45 bar (from 2 to 4.5 MPa).

The Fischer-Tropsch synthesis reaction may be performed in any suitable type of reactor, for example it may be performed in a fixed bed reactor, a slurry bed reactor, or a CANS reactor. Specifically with respect to CANS reactors, a passivated catalyst material as described herein can be packaged in a modular catalyst container suitable for use in a reactor tube of the CANS reactor (e.g., offsite then transported to the reactor site). The CANS can be loaded with catalyst and put in the plant for the re-reduction. The CANS design means handling, transporting and storing the catalyst (in CANS) is much easier and this becomes very useful for the process. The catalyst can be loaded in the CAN and reduced and passivated ahead of storage, shipping, and subsequent loading into a Fischer-Tropsch plant where the catalyst may be reactivated. CANS reactors, and associated containers suitable for use in the processes described herein, are described in WO 2011/048361, which is hereby incorporated herein by reference in its entirety for its disclosure of such canisters and uses thereof.

It may be desired that the passivated catalyst material is introduced into the reactor zone before the formation of the activated catalyst material, i.e., such that the activation of the catalyst occurs in situ in the reactor zone. This approach allows loading of the passivated catalyst material, from a first reactor or from another site (e.g., by unpackaging it from a container, or by coupling a canister into the reactor zone). Subsequently, the second reactor may be purged of undesirable components, such as atmospheric oxygen or moisture, prior to formation of the activated catalyst material, allowing the provision of highly active catalyst under carefully controlled conditions. Accordingly, in certain embodiments as otherwise described herein, the process further comprises introducing the passivated catalyst material into the reactor zone.

In certain situations, the passivated catalyst material may replace a previous catalyst material. For example, the previous catalyst material may be a spent catalyst material that has lost activity or selectivity through incidental degradation. As another example, the spent catalyst material may be one optimized for a particular process or product distribution, and a different catalyst is desired which has different optimization. As such, in certain embodiments as otherwise described herein, the method further comprises, before introducing the passivated catalyst material into the reactor zone, removing a spent catalyst material from the reactor zone.

The hydrocarbon composition can vary based on changes in process conditions as known in the art. In certain embodiments, the hydrocarbon composition comprises hydrocarbons (e.g., linear hydrocarbons, branched hydrocarbons, saturated or unsaturated hydrocarbons) and oxygenated derivatives thereof. Examples of the oxygenated derivatives thereof include hydrocarbons with one or more functional group of alcohols, aldehydes, ketones, carboxylic acids, esters, and combinations thereof. In certain embodiments as otherwise described herein, the hydrocarbon composition comprises at least one of alkanes, alkenes, and alcohols.

### EXAMPLES

The Examples that follow are illustrative of specific embodiments of the methods of the disclosure, and various uses thereof. They are set forth for explanatory purposes only, and are not to be taken as limiting the scope of the disclosure.

### X-Ray Fitting Protocol

X-ray diffraction data was collected using CuKα radiation at 10.5 kW (for reference, a conventional lab source is normally 1.5 kW) using a Bruker D8 Super speed source and LynxEye detector over the angular range of 15-90 degrees 2-theta, with fixed divergence slits. The instrument has an Anton Parr XRK900 reaction chamber which enables data collection up to 900 °C and 10 barg. This is specified with the open sample mount to ensure gas flow through the sample to reduce the reliance on diffusion through the powder only. TOPAS software was used for profile fitting and analysis of peaks. The *in situ* XRD cell was set up to feed CO, H₂, inert gas or syngas as required, with pressures up to 10 barg. Once the sample was loaded (-100 µL of catalyst) into the XRD cell, 30 minute analyses were collected every 5 °C rise between room temperature and 300 °C. This was done to give a very slow ramp to observe the transitions in cobalt species.

The crystallite size was calculated from the integral breadth and Rietveld refinement from all of the peaks collected in the diffraction pattern. Broadening from strain contributed a negligible amount to the refinement and so was not used. Therefore, all of the broadening in the spinel and monoxide peaks were attributed to changes in crystallite size.

### Example 1: In-situ Control of Catalyst Composition

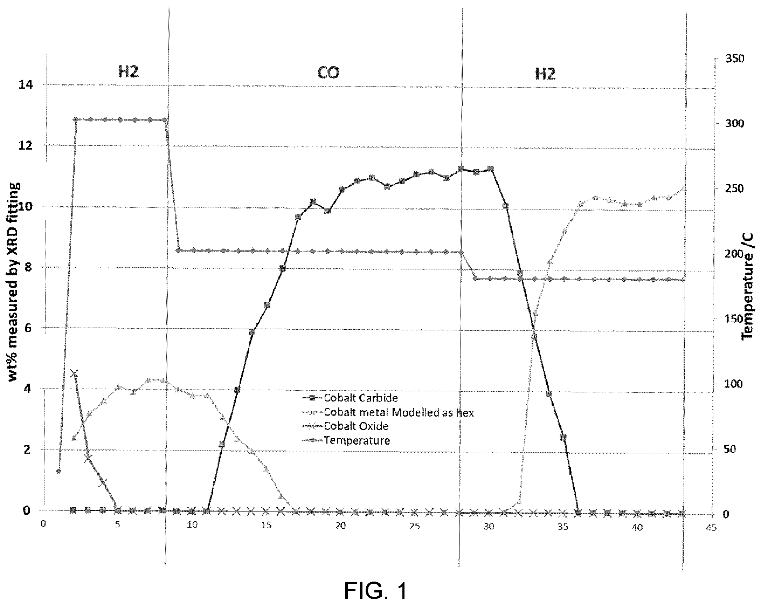

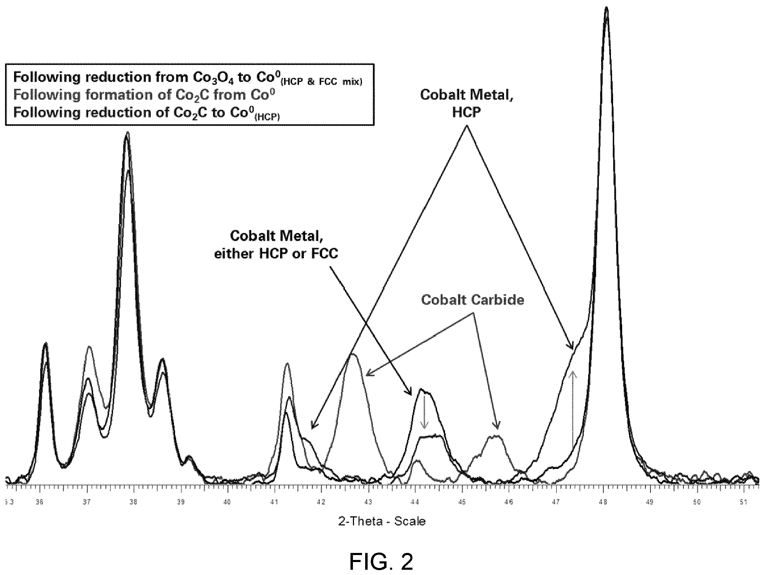

To assess the transformation of the catalyst material from cobalt oxide, to cobalt carbide, to hcp cobalt, in-situ x-ray diffraction was used to monitor a 10% cobalt catalyst with 1% manganese on a titania support during treatment under various conditions. Results are shown in FIGS. 1 and 2. In FIG. 1, three reaction steps are shown, with wt% of various cobalt species shown as determined by XRD fitting. In the initial treatment with H₂ at 300 °C and 1 bar, cobalt oxide in the first catalyst material is converted to cobalt metal in a reduced catalyst material. Treatment with a 50% carbon monoxide gas with inert carrier gas at 200 °C converts cobalt metal to cobalt carbide in a passivated catalyst material. Then in a final step, pure hydrogen treatment at only 180 °C, about the same as a typical Fischer-Tropsch reaction temperature, decomposes the carbide to cobalt metal to provide an activated catalyst material. FIG. 2 shows the XRD patterns of the materials resulting from the three reaction steps; notably, only hcp cobalt metal is observed in the activated catalyst material.

### Example 2: Air Stability of Passivated Catalyst Material

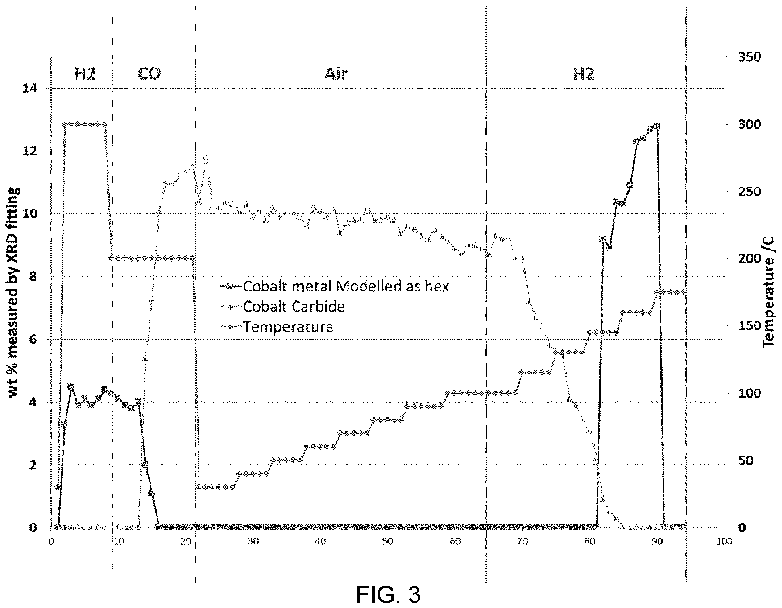

To explore the stability of the passivate catalyst material under atmospheric conditions, the passivated catalyst comprising cobalt carbide was formed as described above. After forming the cobalt carbide with carbon monoxide, the catalyst was cooled and the gas feed changed to air. The temperature was slowly ramped up to 100 °C under airflow until the carbide began to disappear as observed by x-ray diffraction. then held in air at increasing temperatures up to about 100 °C. Results are shown in FIG. 3. The cobalt carbide was found to be stable in air to about 60 °C. Under 100% hydrogen, the carbide is converted to cobalt metal at 180 °C as described above.

Accordingly, these data demonstrate that the methods and materials described herein can allow for formation of a passivated catalyst material in which cobalt is present substantially in a carbide form, and the storage and transport of that material to a different site for loading into a reactor. Notably, the carbide can be converted to active metal using relatively gentle hydrogen treatment - e.g., at temperatures similar to those used in conventional Fischer-Tropsch reactions. Accordingly, a Fischer-Tropsch reaction system does not require extensive retrofitting or additional heating equipment to use the catalysts described herein.

### Example 3: Cobalt Carbide Formation Under Various Conditions

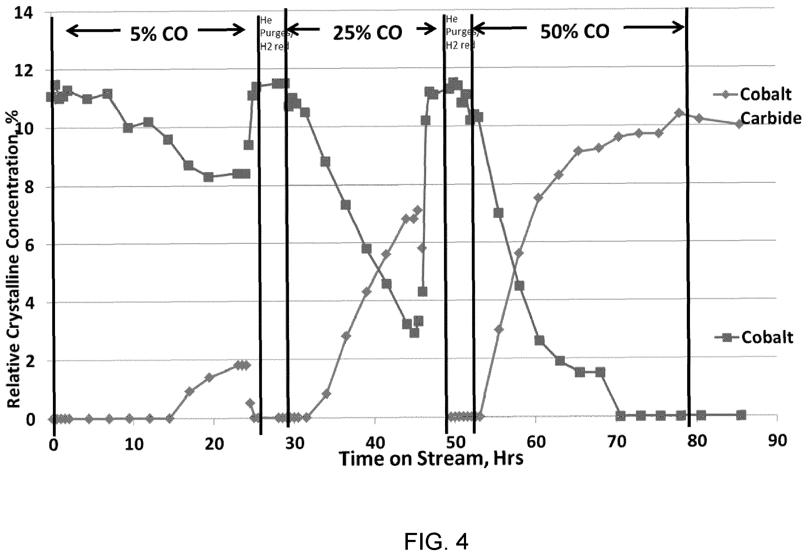

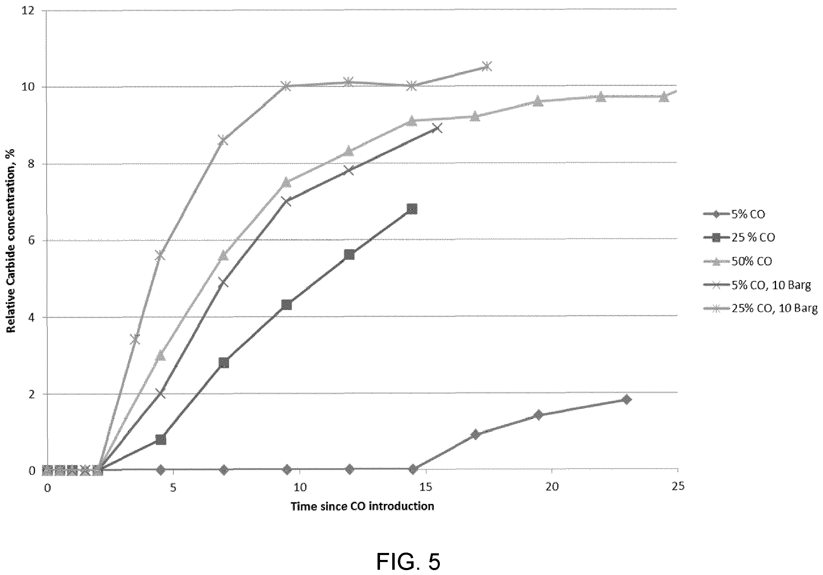

The kinetics of cobalt carbide formation under various gas compositions was investigated and measured with X-ray diffraction as described above. A 10% cobalt, 1% manganese catalyst on a titania support was reduced with 100% H₂ at 300 °C and 1 bar. The temperature was then held at 200 °C and various carbon monoxide feeds (5% CO, 25% CO, and 50% CO, with the balance inert gas) were introduced with a short treatment with a helium/hydrogen mixture between each CO feed to reduce any carbide formed.. Data are shown in FIGS. 4 and 5. Yield of carbide increased with increasing CO concentration, with 50% CO being able to convert all cobalt metal to carbide within about 18 hours on stream. As shown in FIG. 5, increasing pressure provided for faster conversion.

### Example 4: Reactivity in a Fischer-Tropsch Synthesis

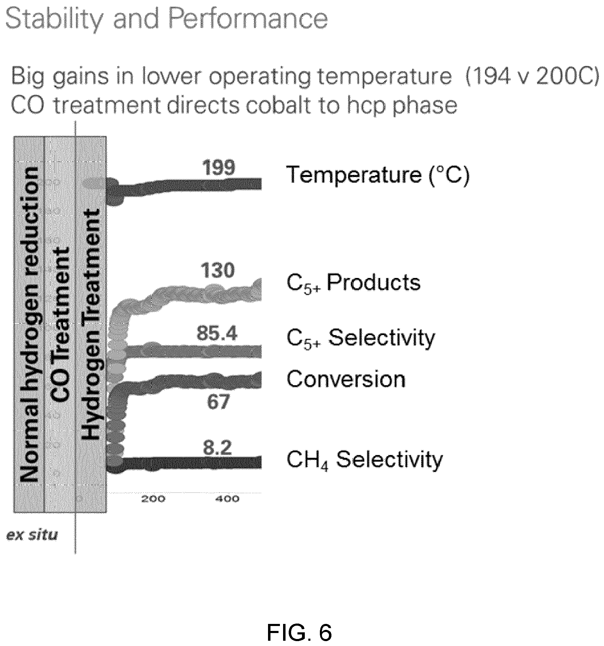

A 10% cobalt, 1% manganese catalyst on a titania support was reduced at 300 °C in 100% H₂ for 15 hours. The catalyst was subsequently passivated with 50% CO in N₂ at 200 °C. Three mL of catalyst was loaded into a Fischer-Tropsch reactor for a synthesis reaction. The Fischer-Tropsch reaction was conducted at 42 barg and 1250 GHSV with a 1.8:1 H₂:CO molar ratio with 20% inert carrier gas. Data are shown in FIG. 6 and summarized in the table below, for about 100 hours on stream.

| **Catalyst** | **Conv** | **CH₄ Sel** | **C₅₊ Sel** | **Temp** |
|---|---|---|---|---|
| Reduction then Carbide treatment and removal of carbide | 63.3 | 8.2 | 85.4 | 199 C |
| Standard in situ Reduction | 63.3 | 8.2 | 84.5 | 198 C |

Various exemplary embodiments of the disclosure include, but are not limited to the enumerated embodiments listed below, which can be combined in any number and in any combination that is not technically or logically inconsistent.

Embodiment 1 provides a process for preparing a catalyst material for use in a Fischer-Tropsch synthesis, the process comprising:
providing a first catalyst material comprising cobalt oxide disposed on a support;
contacting the first catalyst material with a first reducing agent at a first temperature and a first pressure to form a reduced catalyst material; then
contacting the reduced catalyst material with carbon monoxide, thereby forming a passivated catalyst material comprising cobalt carbide.

Embodiment 2 provides the process of embodiment 1, wherein each catalyst material comprises cobalt in the range of 5 wt% to 35 wt%, on an elemental basis.

Embodiment 3 provides the process of embodiment 1, wherein each catalyst material comprises cobalt in the range of 7-35 wt%, or 10-35 wt%, or 5-25 wt%, or 7-25 wt%, or 10-25 wt%, or 5-20 wt%, or 7-20 wt%, or 10-20 wt%, on an elemental basis.

Embodiment 4 provides the process of any of embodiments 1-3, wherein each catalyst material further comprises manganese, e.g., in the range of up to 15 wt% on an elemental basis.

Embodiment 5 provides the process of any of embodiments 1-3, wherein each catalyst material further comprises manganese in an amount in the range of 2-15 wt%, e.g., in an amount in the range of 3-15 wt%, or 4-15 wt%, or 2-12 wt%, or 3-12 wt%, or 4-12 wt%, or 2-10 wt%, or 3-10 wt%, or 4-10 wt%, or 2-7 wt%, or 3-7 wt%, or 4-7 wt%, on an elemental basis.

Embodiment 6 provides the process of any of embodiments 1-5, wherein the support comprises at least one of titanium oxide, zirconium oxide, cerium oxide, aluminum oxide, silicon oxide and zinc oxide.

Embodiment 7 provides the process of any of embodiments 1-6, wherein cobalt of the first catalyst material (e.g., at least 50 mol%, at least 75 mol%, or at least 90 mol%) is in the form of at least one of cobalt oxide and cobalt hydroxide.

Embodiment 8 provides the process of any of embodiments 1-7, wherein the first reducing agent is hydrogen.

Embodiment 9 provides the process of embodiment 8, wherein the first temperature is in the range of 250-350 °C and the first pressure is in the range of 0.7 bara to 3 bara.

Embodiment 10 provides the process of any of embodiments 1-9, wherein the reduced catalyst material comprises cobalt metal, wherein the cobalt metal includes hcp cobalt metal and fcc cobalt metal in a ratio in the range of 25:75 and 75:25 as measured by x-ray diffraction.

Embodiment 11 provides the process of any of embodiments 1-10, wherein at least 25 mol% (e.g., at least 50 mol%) of the cobalt of the passivated catalyst material is in the form of cobalt carbide as measured by x-ray diffraction.

Embodiment 12 provides the process of any of embodiments 1-10, wherein at least 75 mol% (e.g., at least 90 mol%) of the cobalt of the passivated catalyst material is in the form of cobalt carbide as measured by x-ray diffraction

Embodiment 13 provides the process of any of embodiments 1-12, further comprising packaging the passivated catalyst material, e.g., in a closed container such as a drum, a bag, a box, a canister, or a modular catalyst container.

Embodiment 14 provides the process of any of embodiments 1-13, further comprising transporting the passivated catalyst material to a location distant from the reactor in which it is passivated (e.g., transporting to a different reactor, building, site, or facility).

Embodiment 15 provides the process of Embodiment 14, in which the location distant the reactor in which the passivated catalyst material is passivated is at least one mile therefrom, e.g., at least ten miles therefrom, at least twenty miles therefrom, at least fifty miles therefrom, or at least one hundred miles therefrom.

Embodiment 16 provides a passivated catalyst material for the Fischer-Tropsch synthesis of a hydrocarbon composition from a gaseous feed comprising carbon monoxide and hydrogen, the passivated catalyst material comprising cobalt disposed on a support, wherein at least 25 mol% (e.g., at least 50%) of the cobalt of the passivated catalyst material is in the form of cobalt carbide as measured by x-ray diffraction.

Embodiment 17 provides the passivated catalyst material according to embodiment 16, wherein at least 75 mol% (e.g., at least 90 mol%) of the cobalt of the passivated catalyst material is in the form of cobalt carbide as measured by x-ray diffraction

.Embodiment 18 provides the passivated catalyst material according to embodiment 16 or embodiment 17, wherein each catalyst material comprises cobalt in the range of 5 wt% to 35 wt%, on an elemental basis.

Embodiment 19 provides the passivated catalyst material according to embodiment 16 or embodiment 17, wherein each catalyst material comprises cobalt in the range of 7-35 wt%, or 10-35 wt%, or 5-25 wt%, or 7-25 wt%, or 10-25 wt%, or 5-20 wt%, or 7-20 wt%, or 10-20 wt%, on an elemental basis.

Embodiment 20 provides the passivated catalyst material according to any of embodiments 16-19, wherein each catalyst material further comprises manganese, e.g., in the range of up to 15 wt% on an elemental basis.

Embodiment 21 provides the passivated catalyst material according to any of embodiments 16-19, wherein each catalyst material further comprises manganese in an amount in the range of 2-15 wt%, e.g., in an amount in the range of 3-15 wt%, or 4-15 wt%, or 2-12 wt%, or 3-12 wt%, or 4-12 wt%, or 2-10 wt%, or 3-10 wt%, or 4-10 wt%, or 2-7 wt%, or 3-7 wt%, or 4-7 wt%, on an elemental basis.

Embodiment 22 provides the passivated catalyst material according to any of embodiments 16-21, wherein the support comprises at least one of titanium oxide, zirconium oxide, cerium oxide, aluminum oxide, silicon oxide and zinc oxide.

Embodiment 23 provides a passivated catalyst material (e.g., according to any of embodiments 16-22), prepared by a process according to any of embodiments 1-15.

Embodiment 24 provides the passivated catalyst material of any of embodiments 16-23, packaged in a closed container, e.g., in a drum, a bag, a box, a canister, or a modular catalyst container.

Embodiment 25 provides a process for providing an activated catalyst material suitable for use in a Fischer-Tropsch synthesis, the process comprising:
contacting a passivated catalyst material of any of embodiments 16-24 with a second reducing agent at a second temperature and a second pressure to form an activated catalyst material comprising cobalt metal, such that the activated catalyst material comprises less cobalt carbide and more cobalt metal than the passivated catalyst material.

Embodiment 26 provides the process of embodiment 25, further comprising unpackaging the passivated catalyst material (e.g., from the closed container, e.g., drum, bag, box, canister, or modular catalyst container in which it is packaged).

Embodiment 27 provides the process of embodiment 26, wherein at least 50 mol% of the cobalt of the activated catalyst material is in the form of cobalt metal.

Embodiment 28 provides the process of embodiment 26, wherein at least 75 mol% (e.g., at least 90 mol%, at least 95 mol%, or at least 99 mol%) of the cobalt of the activated catalyst material is in the form of cobalt metal.

Embodiment 29 provides the process of any of embodiments 26-28, wherein the cobalt metal of the activated catalyst material comprises hcp cobalt metal in a ratio of at least 50:50 (e.g., at least 60:40, or at least 70:30) to fcc cobalt metal as measured by x-ray diffraction.

Embodiment 30 provides the process of any of embodiments 26-29, wherein the cobalt metal of the activated catalyst material comprises hcp cobalt metal in a ratio of at least 75:25 to fcc cobalt metal as measured by x-ray diffraction.

Embodiment 31 provides the process of any of embodiments 26-29, wherein the cobalt metal of the activated catalyst material comprises hcp cobalt metal in a ratio of at least 80:20 (e.g., at least 85:15) to fcc cobalt metal as measured by x-ray diffraction.

Embodiment 32 provides the process of any of embodiments 26-31, wherein the contacting with the second reducing agent is a contacting with hydrogen and the second temperature is in the range of 120 °C to 250 °C.

Embodiment 33 provides the process of embodiment 32, wherein the second temperature is in the range of 120 °C to 195 °C.

Embodiment 34 provides an activated catalyst material for the Fischer-Tropsch synthesis of a hydrocarbon composition from a gaseous feed comprising carbon monoxide and hydrogen, the activated catalyst material comprising cobalt disposed on a support, wherein the cobalt comprises hcp cobalt metal in a ratio of at least 50:50 to fcc cobalt metal.

Embodiment 35 provides the activated catalyst material of embodiment 34, wherein at least 50 mol% of the cobalt of the activated catalyst material is in the form of cobalt metal.

Embodiment 36 provides the activated catalyst material of embodiment 34, wherein the cobalt comprises hcp cobalt metal in a ratio of at least 75:25 (e.g., at least 80:20, or at least 85:15) to fcc cobalt metal.

Embodiment 37 provides the activated catalyst material of any of embodiments 34-36, comprising cobalt in the range of 5 wt% to 35 wt%, on an elemental basis.

Embodiment 38 provides the activated catalyst material of any of embodiments 34-36, comprising cobalt in the range of 7-35 wt%, or 10-35 wt%, or 5-25 wt%, or 7-25 wt%, or 10-25 wt%, or 5-20 wt%, or 7-20 wt%, or 10-20 wt%, on an elemental basis.

Embodiment 39 provides the activated catalyst material of any of embodiments 34-38, further comprising manganese, e.g., in the range of up to 15 wt% on an elemental basis.

Embodiment 40 provides the activated catalyst material according to any of embodiments 34-39, further comprising manganese in an amount in the range of 2-15 wt%, e.g., in an amount in the range of 3-15 wt%, or 4-15 wt%, or 2-12 wt%, or 3-12 wt%, or 4-12 wt%, or 2-10 wt%, or 3-10 wt%, or 4-10 wt%, or 2-7 wt%, or 3-7 wt%, or 4-7 wt%, on an elemental basis.

Embodiment 41 provides the activated catalyst material according to any of embodiments 34-40, wherein the support comprises at least one of titanium oxide, zirconium oxide, cerium oxide, aluminum oxide, silicon oxide and zinc oxide.

Embodiment 42 provides an activated catalyst material (e.g., according to any of embodiments 34-41), prepared by a process according to any of embodiments 25-33.

Embodiment 43 provides a process for converting a mixture of hydrogen and carbon monoxide to a hydrocarbon composition comprising one or more optionally oxygenated hydrocarbons, the process comprising:
providing an activated catalyst material according to any of embodiments 34-42 in a reactor zone (e.g., in a Fischer-Tropsch reactor), or performing the method of any of embodiments 25-33; and
contacting the activated catalyst material in the reactor zone with a gaseous mixture comprising carbon monoxide and hydrogen, to form the hydrocarbon composition.

Embodiment 44 provides the process of embodiment 43, wherein providing the activated catalyst material comprises performing an activation process according to any of embodiments 25-33.

Embodiment 45 provides the process of embodiment 44, wherein the activation process is performed in situ in the reactor zone.

Embodiment 46 provides the process of embodiment 45, wherein before performing the activation process, the passivated catalyst material is introduced into the reactor zone.

Embodiment 47 provides the process of embodiment 46, further comprising, before introducing the passivated catalyst material into the reactor zone, removing a spent catalyst material from the reactor zone.

Embodiment 48 provides the process of any of embodiments 43-47, wherein the hydrocarbon composition comprises at least one of alkanes, alkenes, and alcohols.

Embodiment 49 provides a process for preparing a catalyst material for use in a Fischer-Tropsch synthesis, comprising:
providing a first catalyst material comprising cobalt oxide disposed on a support;
contacting the first catalyst material with a first reducing agent at a first temperature and a first pressure to form a reduced catalyst material, wherein the first catalyst material comprises cobalt metal;
contacting the reduced catalyst material with carbon monoxide, thereby forming a passivated catalyst material comprising cobalt carbide; and
contacting the passivated catalyst material with a second reducing agent at a second temperature and a second pressure to form an activated catalyst material, wherein the activated catalyst material comprises less metal carbide than the passivated catalyst material, wherein the activated catalyst material comprises cobalt metal.

Embodiment 50 provides the process of embodiment 49, wherein an hcp proportion in a ratio of hcp cobalt metal to fcc cobalt metal of the activated catalyst material is at least 10 points greater than an hcp proportion of a ratio of hcp cobalt metal to fcc cobalt metal of the reduced catalyst material.

Embodiment 51 provides the process of embodiment 49, wherein an hcp proportion in a ratio of hcp cobalt metal to fcc cobalt metal of the activated catalyst material is at least 15 points (e.g., at least 20 points, or even at least 25 points) greater than an hcp proportion of a ratio of hcp cobalt metal to fcc cobalt metal of the reduced catalyst material.

Embodiment 52 provides the process of any of embodiments 49-51, wherein the reduced catalyst material comprises hcp cobalt metal and fcc cobalt metal in a ratio in the range of 25:75 and 75:25; and the activated catalyst material comprises hcp cobalt metal in a ratio of at least 75:25 to fcc cobalt metal.

Embodiment 53 provides the process of any of embodiments 49-52, wherein the cobalt metal of the activated catalyst material comprises hcp cobalt metal in a ratio of at least 50:50 (e.g., at least 60:40, or at least 70:30) to fcc cobalt metal as measured by x-ray diffraction.

Embodiment 54 provides the process of any of embodiments 49-52, wherein the cobalt metal of the activated catalyst material comprises hcp cobalt metal in a ratio of at least 75:25 to fcc cobalt metal as measured by x-ray diffraction.

Embodiment 55 provides the process of any of embodiments 49-52, wherein the cobalt metal of the activated catalyst material comprises hcp cobalt metal in a ratio of at least 80:20 (e.g., at least 85:15) to fcc cobalt metal as measured by x-ray diffraction.

Embodiment 56 provides the process of any of embodiments 49-55, further comprising packaging the passivated catalyst material, e.g., in a closed container such as a drum, a bag, a box, a canister, or a modular catalyst container.

Embodiment 57 provides the process of any of embodiments 49-56, further comprising transporting the passivated catalyst material to a location distant from the reactor in which it is passivated (e.g., transporting to a different reactor, building, site, or facility).

Embodiment 58 provides the process of Embodiment 57, in which the location distant the reactor in which the passivated catalyst material is passivated is at least one mile therefrom, e.g., at least ten miles therefrom, at least twenty miles therefrom, at least fifty miles therefrom, or at least one hundred miles therefrom.

The particulars shown herein are by way of example and for purposes of illustrative discussion of certain embodiments of the present disclosure only and are presented in the cause of providing what is believed to be the most useful and readily understood description of the principles and conceptual aspects of various embodiments of the disclosure. In this regard, no attempt is made to show details associated with the methods of the disclosure in more detail than is necessary for the fundamental understanding of the methods described herein, the description taken with the examples making apparent to those skilled in the art how the several forms of the methods of the disclosure may be embodied in practice. Thus, before the disclosed processes and devices are described, it is to be understood that the aspects described herein are not limited to specific embodiments, apparatus, or configurations, and as such can, of course, vary. It is also to be understood that the terminology used herein is for the purpose of describing particular aspects only and, unless specifically defined herein, is not intended to be limiting.

The terms "a," "an," "the" and similar referents used in the context of describing the methods of the disclosure (especially in the context of the following embodiments and claims) are to be construed to cover both the singular and the plural, unless otherwise indicated herein or clearly contradicted by context.

All methods described herein can be performed in any suitable order of steps unless otherwise indicated herein or otherwise clearly contradicted by context. The use of any and all examples, or exemplary language (e.g., "such as") provided herein is intended merely to better illuminate the methods of the disclosure and does not pose a limitation on the scope of the disclosure. No language in the specification should be construed as indicating any non-claimed element essential to the practice of the methods of the disclosure.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

As will be understood by one of ordinary skill in the art, each embodiment disclosed herein can comprise, consist essentially of or consist of its particular stated element, step, ingredient or component. As used herein, the transition term "comprise" or "comprises" means includes, but is not limited to, and allows for the inclusion of unspecified elements, steps, ingredients, or components, even in major amounts. The transitional phrase "consisting of" excludes any element, step, ingredient or component not specified. The transition phrase "consisting essentially of" limits the scope of the embodiment to the specified elements, steps, ingredients or components and to those that do not materially affect the embodiment.

All percentages, ratios and proportions herein are by weight, unless otherwise specified.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements.

Groupings of alternative elements or embodiments of the disclosure are not to be construed as limitations. Each group member may be referred to and claimed individually or in any combination with other members of the group or other elements found herein. It is anticipated that one or more members of a group may be included in, or deleted from, a group for reasons of convenience and/or patentability. When any such inclusion or deletion occurs, the specification is deemed to contain the group as modified thus fulfilling the written description of all Markush groups used in the appended claims.

Some embodiments of various aspects of the disclosure are described herein, including the best mode known to the inventors for carrying out the methods described herein. Of course, variations on these described embodiments will become apparent to those of ordinary skill in the art upon reading the foregoing description. The skilled artisan will employ such variations as appropriate, and as such the methods of the disclosure can be practiced otherwise than specifically described herein. Accordingly, the scope of the disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

The phrase "at least a portion" as used herein is used to signify that, at least, a fractional amount is required, up to the entire possible amount.

In closing, it is to be understood that the various embodiments herein are illustrative of the methods of the disclosures. Other modifications that may be employed are within the scope of the disclosure. Thus, by way of example, but not of limitation, alternative configurations of the methods may be utilized in accordance with the teachings herein. Accordingly, the methods of the present disclosure are not limited to that precisely as shown and described.

## Claims

1. A process for preparing a catalyst material for use in a Fischer-Tropsch synthesis, the process comprising:
providing a first catalyst material comprising cobalt oxide disposed on a support;
contacting the first catalyst material with a first reducing agent at a first temperature and a first pressure to form a reduced catalyst material; then
contacting the reduced catalyst material with carbon monoxide, thereby forming a passivated catalyst material comprising cobalt carbide.

2. The process of claim 1, wherein each catalyst material comprises cobalt in the range of 5 wt% to 35 wt%, on an elemental basis.

3. The process of claim 1. wherein each catalyst material further comprises manganese, ruthenium or rhenium, e.g., in the range of up to 15 wt% on an elemental basis.

4. The process of claim 1, wherein the first reducing agent is hydrogen, and the first temperature is in the range of 250-350 °C and the first pressure is in the range of 0.7 bara to 8 bara.

5. The process of claim 1, wherein the reduced catalyst material comprises cobalt metal, wherein the cobalt metal comprises hcp cobalt metal and fcc cobalt metal in a ratio in the range of 25:75 to 75:25.

6. The process of claim 1, wherein at least 20 mol% of the cobalt of the passivated catalyst material is in the form of cobalt carbide as measured by x-ray diffraction.

7. The process of claim 1, further comprising packaging the passivated catalyst material, e.g., in a closed container such as a drum, a bag, a box, a canister, or a modular catalyst container.

8. The process of claim 1, further comprising transporting the passivated catalyst material to a location distant from the reactor in which it is passivated (e.g., transporting to a different reactor, building, site, or facility).

9. The process of claim 8, wherein the location distant the reactor in which the passivated catalyst material is passivated is at least ten miles therefrom.

10. A passivated catalyst material for the Fischer-Tropsch synthesis of a hydrocarbon composition from a gaseous feed comprising carbon monoxide and hydrogen, the passivated catalyst material comprising cobalt disposed on a support, wherein at least 20 mol% of the cobalt of the passivated catalyst material is in the form of cobalt carbide as measured by x-ray diffraction.

11. The passivated catalyst material according to claim 10, wherein each catalyst material comprises cobalt in the range of 5 wt% to 35 wt%, on an elemental basis.

12. The passivated catalyst material of claim 10, packaged in a closed container, e.g., in a drum, a bag, a box, a canister, or a modular catalyst container.

13. A process for providing an activated catalyst material suitable for use in a Fischer-Tropsch synthesis, the process comprising:
contacting a passivated catalyst material according to claim 10 with a second reducing agent at a second temperature and a second pressure to form an activated catalyst material comprising cobalt metal, such that the activated catalyst material comprises less cobalt carbide and more cobalt metal than the passivated catalyst material.

14. The process of claim 13, wherein at least 75 mol% of the cobalt of the activated catalyst material is in the form of cobalt metal.

15. The process of claim 12, wherein the cobalt metal of the activated catalyst material comprises hcp cobalt metal in a ratio of at least 75:25 to fcc cobalt metal as measured by x-ray diffraction.

16. The process of any of claim 12, wherein the contacting with the second reducing agent is a contacting with hydrogen and the second temperature is in the range of 120 °C to 250 °C.

17. An activated catalyst material for the Fischer-Tropsch synthesis of a hydrocarbon composition from a gaseous feed comprising carbon monoxide and hydrogen, the activated catalyst material comprising cobalt disposed on a support, wherein cobalt metal of the activated catalyst material comprises hcp cobalt metal in a ratio of at least 50:50 to fcc cobalt metal as measured by x-ray diffraction.

18. The activated catalyst material of claim 17, wherein the cobalt metal of the activated catalyst material comprises hcp cobalt metal in a ratio of at least 75:25 to fcc cobalt metal as measured by x-ray diffraction.

19. A process for converting a mixture of hydrogen and carbon monoxide to a hydrocarbon composition comprising one or more optionally oxygenated hydrocarbons, the process comprising:
providing an activated catalyst material according to claim 17 in a reactor zone; and
contacting the activated catalyst material in the reactor zone with a gaseous mixture comprising carbon monoxide and hydrogen, to form the hydrocarbon composition.

20. The process of claim 19, wherein providing the activated catalyst material comprises performing an activation process, wherein the activation process is performed in situ in the reactor zone.

21. A process for preparing a catalyst material for use in a Fischer-Tropsch synthesis, comprising:
providing a first catalyst material comprising cobalt oxide disposed on a support;
contacting the first catalyst material with a first reducing agent at a first temperature and a first pressure to form a reduced catalyst material, wherein the first catalyst material comprises cobalt metal;
contacting the reduced catalyst material with carbon monoxide, thereby forming a passivated catalyst material comprising cobalt carbide; and
contacting the passivated catalyst material with a second reducing agent at a second temperature and a second pressure to form an activated catalyst material, wherein the activated catalyst material comprises less metal carbide than the passivated catalyst material, wherein the activated catalyst material comprises cobalt metal.

22. The process of claim 21, wherein an hcp proportion in a ratio of hcp cobalt metal to fcc cobalt metal of the activated catalyst material is at least 10 points greater than an hcp proportion of a ratio of hcp cobalt metal to fcc cobalt metal of the reduced catalyst material.

23. The process of claim 21, further comprising transporting the passivated catalyst material to a location distant from the reactor in which it is passivated (e.g., transporting to a different reactor, building, site, or facility).
